# FASCICULE DE BREVET EUROPEEN

(11) **EP 2 328 958 B1**
(45) Date de publication et mention de la délivrance du brevet: **17.09.2014**
(21) Numéro de dépôt: 09809334.7
(22) Date de dépôt: 26.08.2009
(51) Int. Cl.: C08J 5/24, C08L 63/08, C08L 91/00, B64G 1/22, C08L 83/06, C08L 63/02, C08L 63/04

(54) **UTILISATION DE RESINES POLYMERISABLES, A FAIBLE DEGAZAGE SOUS VIDE, POUR LA FABRICATION DE MATERIAUX COMPOSITES A USAGE SPATIAL**
VERWENDUNG POLYMERISIERBARER HARZE MIT GERINGER VAKUUMENTGASUNG ZUR HERSTELLUNG RAUMFAHRTTAUGLICHER VERBUNDMATERIALIEN
USE OF POLYMERISABLE RESINS WITH LOW VACUUM DEGASSING FOR MAKING SPACE-GRADE COMPOSITE MATERIALS

(30) Priorité: 28.08.2008 FR 0855766
(43) Date de publication de la demande: 08.06.2011
(73) Titulaire: ASTRIUM SAS, 75016 Paris (FR); Universite De Reims, 51097 Reims Cedex (FR); Centre National de la Recherche Scientifique, 75016 Paris (FR)
(72) Inventeur: DEFOORT, Brigitte, 33160 Saint-Médard-en-Jalles (FR); MAHIAS, Roman, 33200 Bordeaux (FR); LACOUR, Dominique, 33370 Tresses (FR); COQUERET, Xavier, 51100 Reims (FR); MILLE, Marion, 51100 Reims (FR)
(74) Mandataire: Ilgart, Jean-Christophe
(86) Numéro de dépôt international: PCT/EP2009/060969
(87) Numéro de publication internationale: WO 2010/023217

(56) Documents cités:
- WO-A-03/022904
- FR-A- 2 874 531
- US-A- 5 721 316
- US-A1- 2007 167 556
- DATABASE WPI Week 200511 Thomson Scientific, London, GB; AN 2005-094530 XP002518946 & JP 2005 002226 A (TOSHIBA CHEM CORP) 6 janvier 2005 (2005-01-06)
- DATABASE WPI Week 199227 Thomson Scientific, London, GB; AN 1992-224081 XP002518947 & JP 04 153252 A (ASAHI CHEM IND CO LTD) 26 mai 1992 (1992-05-26)
- DATABASE WPI Week 198935 Thomson Scientific, London, GB; AN 1989-251858 XP002518948 & JP 01 182328 A (HITACHI CHEM CO LTD) 20 juillet 1989 (1989-07-20)
- DATABASE COMPENDEX [Online] ENGINEERING INFORMATION, INC., NEW YORK, NY, US; 1 janvier 2002 (2002-01-01), ALLRED R E ET AL: "UV rigidizable carbon-reinforced isogrid inflatable booms" XP009113664 Database accession no. E2002277001455 & COLLECTION OF TECHNICAL PAPERS - AIAA/ASME/ASCE/AHS/ASC STRUCTURES, STRUCTURAL DYNAMICS AND MATERIALS CONFERENCE 2002 AMERICAN INST. AERONAUTICS AND ASTRONAUTICS INC. US, vol. 1, 2002, pages 25-35,
- CADOGAN D P ET AL: "Rigidizable materials for use in gossamer space inflatable structures" AIAA/ASME/ASCE/AHS/ASC STRUCTURES, STRUCTURAL DYNAMICS ANDMATERIALS CONFERENCE AND EXHIBIT AND AIAA/ASME/AHS ADAPTIVESTRUCTURES FORUM, XX, XX, 16 avril 2001 (2001-04-16), pages 1-18, XP002323822
- CADOGAN D P; SCARBOROUGH S E; LIN J K; SAPNA III G H: "Shape memory composite development for use in gossamer space inflatable structures" COLLECTION OF TECHNICAL PAPERS - AIAA/ASME/ASCE/AHS/ASC STRUCTURES, STRUCTURAL DYNAMICS AND MATERIALS CONFERENCE, avril 2002 (2002-04), pages 1-11, XP009113625
- EDWARD J SIMBURGER ET AL: "New - Development, Design, And Testing Of Powersphere Multifunctional Ultraviolet-Rigidizable Inflatable Structures" AIAA-2003-1897, XX, XX, 1 septembre 2003 (2003-09-01), pages 1-11, XP002323823

## Description

### DOMAINE TECHNIQUE

La présente invention se rapporte à l'utilisation de résines polymérisables particulières pour la fabrication de matériaux composites à usage spatial et, plus spécifiquement, de matériaux composites destinés à entrer dans la constitution de structures à déploiement par gonflage, encore connues sous le nom de « structures Gossamer ».

Sont également décrits des compositions de résines polymérisables, utiles pour la fabrication de matériaux composites à usage spatial, ainsi que de tels matériaux composites.

### ÉTAT DE LA TECHNIQUE ANTÉRIEURE

Le volume limité sous les coiffes des lanceurs spatiaux a conduit à concevoir des structures qui sont lancées repliées et qui se déploient une fois parvenues dans l'espace, ce qui est notamment le cas des structures Gossamer.

Ces structures, qui peuvent notamment être des panneaux solaires, des réflecteurs, des pares-soleil, des antennes, des miroirs, des voiles solaires ou analogues, comprennent un ensemble d'éléments creux, généralement tubulaires, qui sont constitués de membranes fines, pliées de sorte à former un soufflet et dont le déploiement dans l'espace résulte de leur remplissage par un gaz sous pression qui est stocké dans un réservoir attenant.

Une fois déployées dans l'espace, les structures Gossamer nécessitent d'être rigidifiées pour pouvoir résister à d'éventuels chocs avec des météorites.

C'est la raison pour laquelle il a été proposé de réaliser les membranes des structures Gossamer à partir de matériaux fibreux, par exemple des tissus de fibres de carbone ou de Kevlar, qui sont imprégnés d'une composition à base d'une résine polymérisable, et d'induire la polymérisation de cette résine par la température ou les ultraviolets après déploiement desdites structures dans l'espace.

Il est bien connu que, dans le vide, les matériaux dégazent soit parce que leur surface a été polluée soit parce qu'ils contiennent ou génèrent par dégradation des composés volatils.

Or, ces dégazages ont des conséquences néfastes. En effet, si les composés volatils sont des constituants du matériau qui dégaze ou résultent de la dégradation de constituants de ce matériau, alors ce dernier peut perdre ses propriétés en même temps que ses constituants. De plus, un dégazage constitue de façon générale une pollution du milieu. Ainsi, par exemple, il peut conduire dans le cas d'une sonde spatiale à la formation de dépôts sur les instruments optiques qui peuvent à leur tour conduire à la perte de fonctionnalité de ces instruments.

Concernant spécifiquement le dégazage dans l'espace des résines polymérisables entrant dans la constitution de structures Gossamer, il existe extrêmement peu de données dans la littérature.

En fait, les données existantes se limitent à un article aux noms de Cadogan et de Scaborough qui a été publié en 2001 par l'American Institute of Aeronautics and Astronautics (AIAA Gossamer Spacecraft Forum, 16-19 avril 2001, Seattle, WA) et dans lequel ces auteurs minimisent l'importance de ce dégazage et, par là-même, de ses conséquences. En effet, Cadogan et Scaborough considèrent que le dégazage serait extrêmement limité du fait que les couches de matériau fibreux imprégné de résine sont prises en sandwich entre deux films étanches aux gaz.

En réalité, il s'avère que les films polymères dont l'utilisation est préconisée pour réaliser les parois de structures Gossamer ne sont pas réellement étanches aux gaz. De plus, l'expérience montre qu'il est même souhaitable que les parois de structures Gossamer soient au moins partiellement perméables aux gaz (comme décrit sans la demande internationale PCT publiée sous le n° WO 2006/024805) pour éviter de maintenir des poches d'air entre les couches de matériau fibreux, susceptibles de provoquer une déformation de ces structures et de perturber leur déploiement dans l'espace.

Le problème des conséquences néfastes du dégazage dans l'espace des résines polymérisables présentes dans les structures Gossamer est donc bien réel.

Un certain nombre de documents brevets traite du dégazage de résines polymérisables. Toutefois, il convient de remarquer que, non seulement ces documents visent des applications (emballages, protection contre l'incendie, photoglyptographie pour microprocesseurs, micro-électronique, ...) qui n'ont rien à voir avec le domaine spatial, mais que, de plus, leur objectif est d'éviter un dégazage après polymérisation des résines ou au cours de la dépolymérisation de ces résines alors que, dans le cas des structures Gossamer, c'est surtout le dégazage qui se produit avant que les résines ne polymérisent qui est problématique.

Les Inventeurs se sont donc fixé pour but de trouver des résines polymérisables qui ne dégazent pas ou que très peu lorsqu'elles sont soumises à des conditions de pression et de température similaires à celles qui règnent dans un environnement spatial.

Ils se sont aussi fixé pour but que ces résines aient des caractéristiques physico-chimiques compatibles avec une utilisation dans la fabrication de matériaux composites à usage spatial, notamment en ce qui concerne la faisabilité de l'imprégnation de matériaux fibreux du type de ceux classiquement employés dans le domaine spatial et les propriétés mécaniques des matériaux composites ainsi obtenus.

### EXPOSÉ DE L'INVENTION

Ces buts et d'autres encore sont atteints par la présente invention qui se rapporte, à l'utilisation d'au moins une résine polymérisable R1 choisie dans le groupe constitué par les résines de polybutadiène époxydé, les résines de polyisoprène époxydé, les résines de polysiloxane époxydé, les résines de triglycéride époxydé et les résines de polyéther époxydé qui présentent à l'état non polymérisé :
- d'une part, une valeur de perte de masse totale (ou TML de « Total Mass Loss ») inférieure à 10%, une valeur de perte de masse relative (ou RML de « Recovered Mass Loss ») inférieure à 10% et une valeur de matière volatile condensable (ou CVCM de « Collected Volatile Condensable Material ») inférieure à 1%, ces valeurs étant déterminées conformément à la norme ECSS-Q-70-02A de l'Agence Spatiale Européenne ; et
- d'autre part, un poids équivalent d'époxyde (ou EEW de « Epoxy Equivalent Weight ») de 100 à 600 g/mole ;
pour la fabrication d'un matériau composite à usage spatial.

Dans ce qui précède et ce qui suit, on entend par résine polymérisable, une résine qui peut aussi bien n'être constituée que de monomères, de prépolymères ou d'un mélange de monomères et de prépolymères, qu'une résine qui comprend, outre des monomères et/ou des prépolymères, un ou plusieurs additifs comme, par exemple, un amorceur, un accélérateur ou un inhibiteur de polymérisation, un anti-oxydant, un diluant réactif ou non, comme c'est souvent le cas des résines polymérisables disponibles dans le commerce.

Concernant les résines de triglycéride époxydé, le lecteur pourra se référer aux articles de Güner et al. (Prog. Polym. Sci. 2006, 31, 633-670) et de Sperling et Manson (JAOCS 1983, 60(11), 1887-1892). De telles résines sont, par exemple, les résines Vikoflex^{®} commercialisées par la société Arkema.

Par ailleurs, on entend par polymérisation, non seulement la formation de chaînes polymères par liaison de monomères ou prépolymères entre eux, mais également la formation d'un réseau tridimensionnel par l'établissement de liaisons entre ces chaînes polymères, que l'on appelle communément réticulation.

L'essai de dégazage de la norme ECSS-Q-70-02A consiste à conditionner des échantillons du matériau dont on veut tester la tendance au dégazage en laissant ces échantillons pendant 24 heures (t₀ → t₂₄) à une température de (22 ± 3) °C et à une humidité relative de (55 ± 10)%, puis à soumettre ces échantillons à une analyse thermogravimétrique que l'on réalise pendant 24 heures (t₂₄ → t₄₈), à une température de 125°C et sous un vide d'au moins 10⁻³ Pa, et à conditionner de nouveau les échantillons en les laissant pendant 24 heures (t₄₈ → t₇₂) à une température de (22 ± 3) °C et à une humidité relative de (55 ± 10)%.

On détermine ainsi :
- la TML qui correspond à la perte de masse totale présentée par les échantillons au cours de l'analyse thermogravimétrique, c'est-à-dire entre t₂₄ et t₄₈, et qui est exprimée en pourcentage de la masse des échantillons à t₂₄ ;
- la RML qui correspond à la perte totale de masse présentée par les échantillons hors reprise hydrique des échantillons, c'est-à-dire hors la masse de vapeur d'eau réabsorbée par les échantillons entre t₄₈ et t₇₂, et qui est exprimée en pourcentage de la masse des échantillons à t₂₄ ; et
- la CVCM qui correspond à la quantité de matière libérée par le dégazage des échantillons au cours de l'analyse thermogravimétrique et se condensant sur un collecteur, et qui, elle également, est exprimée en pourcentage de la masse des échantillons à t₂₄.

La tendance au dégazage d'un matériau est d'autant plus faible que ses valeurs de TML, RML et CVCM sont plus faibles.

Quand au poids équivalent d'époxyde (EEW), il correspond à la masse de résine, en grammes, qui contient 1 mole de fonction époxyde.

Conformément à l'invention, la résine R1 est de préférence choisie parmi les résines de polybutadiène époxydé et, plus spécialement, parmi les résines qui comprennent des prépolymères comprenant des unités répétitives répondant aux formules (I), (II) et (III) ci-après : 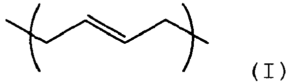 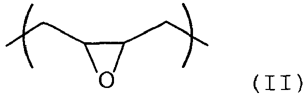 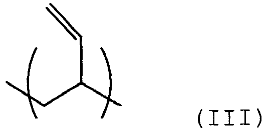 ainsi que deux groupes terminaux réactifs hydroxyles.

Des résines polymérisables de ce type sont, par exemple, les résines de polybutadiène époxydé à groupes terminaux hydroxyles qui sont commercialisées par la société Sartomer sous les noms commerciaux Poly bd^{®} 600E et Poly bd^{®} 605E.

Ces résines, dont les prépolymères répondent schématiquement à la formule (IV) ci-après : 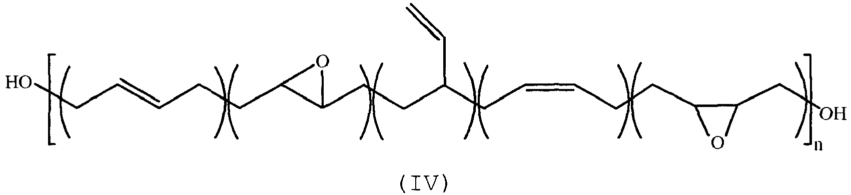 dans laquelle n correspond au nombre de motifs répétitifs présents entre les crochets, présentent typiquement les caractéristiques physico-chimiques suivantes :
- poids moléculaire d'environ 1300 ;
- EEW de 400-500 g/mole pour la résine Poly bd^{®} 600E et de 260-330 g/mole pour la résine Poly bd^{®} 605E ;
- viscosité à 30°C de 7 Pa.s pour la résine Poly bd^{®} 600E et de 22 Pa.s pour la résine Poly bd^{®} 605E ;
- valeur d'hydroxyle de 1,70 méq/g pour la résine Poly bd^{®} 600E et de 1,74 méq/g pour la résine Poly bd^{®} 605E.

Les résines polymérisables précédemment mentionnées, et notamment les résines de nature élastomérique comme les résines de polybutadiène ou polyisoprène époxydé, ont typiquement une température de transition vitreuse (ou Tg) inférieure à la température ambiante et conduisent de ce fait, après polymérisation, à des polymères à module d'Young relativement faible.

Aussi, préfère-t-on dans le cadre de l'invention utiliser ces résines conjointement avec au moins une autre résine polymérisable R2 qui, comme elles, dégaze peu mais qui présente une température de transition vitreuse significativement supérieure à la température ambiante.

Cette résine R2 est de préférence choisie dans le groupe constitué par les résines époxydes de type novolaque et les résines époxydes de type diglycidyléther de bisphénol A (DGEBA) qui présentent, à l'état non polymérisé, une valeur de TML inférieure à 10%, une valeur de RML inférieure à 10% et une valeur de CVCM inférieure à 1% telles que déterminées conformément à la norme ECSS-Q-70-02A, ainsi qu'un EEW de 100 à 600 g/mole.

Des résines qui répondent à ces critères sont notamment les résines époxydes novolaque EPON^{®} Su-4 et EPON^{®} Su-8 de la société Hexion Specialty Chemicals et la résine Tactix^{®} 742 de la société Huntsmann.

De préférence, le mélange de résines R1 et R2 présente, à l'état non polymérisé, une viscosité de 0,2 à 4 Pa.s à une température de 40 à 60°C.

De préférence également, le mélange de résines R1 et R2 présente, à l'état non polymérisé, une valeur de perte de masse totale (TML) inférieure à 5%, une valeur de perte de masse relative (RML) inférieure à 5% et une valeur de matière volatile condensable (CVCM) inférieure à 1% telles que déterminées conformément à la norme ECSS-Q-70-02A.

Conformément à l'invention, on préfère que le mélange de résines R1 et R2 présente à l'état non polymérisé :
- d'une part, une viscosité de 0,2 à 4 Pa.s et, mieux encore, de 0,8 à 1 Pa.s à la température à laquelle on réalise l'imprégnation du matériau fibreux destiné à entrer dans la constitution du matériau composite, laquelle va typiquement de 40 à 60°C ; et
- d'autre part, une valeur de perte de masse totale (TML) inférieure à 5%, une valeur de perte de masse relative (RML) inférieure à 5% et une valeur de matière volatile condensable (CVCM) inférieure à 1% telles que déterminées conformément à la norme ECSS-Q-70-02A.

Les résines R1 et R2 et leurs proportions relatives dans le mélange sont donc ajustées en conséquence.

Ainsi, le mélange de résines R1 et R2 peut notamment comprendre une résine polybutadiène époxydé à groupes terminaux hydroxyles et une résine époxyde de type novolaque dans un rapport massique allant de 1/3 à 3/1.

A titre d'exemple, un mélange de résines satisfaisant aux deux conditions ci-dessus a été obtenu en mélangeant une résine de polybutadiène époxydé à groupes terminaux hydroxyles du type Poly bd^{®} 605E avec une résine époxyde novolaque du type résine EPON^{®} Su-8, dans un rapport massique allant de 1/3 à 3/1.

Conformément à l'invention, la résine R1 ou le mélange de résines R1 et R2 peut également être utilisé conjointement avec au moins un additif choisi dans le groupe constitué par les amorceurs (ou initiateurs) de polymérisation, les agents réticulants (ou durcisseurs), les agents compatibilisants et les charges. Tous ces additifs sont, autant que possible, choisis parmi des composés qui dégazent peu, c'est-à-dire qui satisfont en pratique aux mêmes critères de dégazage que ceux précédemment définis pour les résines R1 et R2.

En tant qu'amorceur de polymérisation, on utilise de préférence :
- soit un photoamorceur permettant d'amorcer la polymérisation, de préférence par voie cationique, sous l'effet d'un rayonnement lumineux, si possible situé dans le visible, comme un sel, par exemple un hexafluorophosphate, du complexe fer-cyclopentadiényl 1-méthyl-naphtalène tel que décrit dans la demande internationale PCT publiée sous le n° WO 2006/043009 ;
- soit un amorceur thermique permettant d'amorcer la polymérisation, de préférence par voie cationique, sous l'effet d'une augmentation de la température, comme un sel (bromure, chlorure, ...) de n-butylpyridinium, de benzylpyrazinium ou un sel d'onium.

Dans les deux cas, l'amorceur de polymérisation est préférentiellement utilisé à hauteur de 0,5 à 5% en masse et, mieux encore, de 1 à 3% en masse de la masse de résine R1 ou du mélange de résines R1 et R2.

En tant qu'agent réticulant, on utilise de préférence un composé choisi parmi les amines, les phénols et les anhydrides d'acide. Cet agent réticulant est avantageusement utilisé en proportions stoechio-métriques par rapport à la résine R1 ou au mélange de résines R1 et R2.

En tant qu'agent compatibilisant, on utilise de préférence un composé choisi parmi les copolymères blocs styrène-butadiène ou styrène-butadièneépoxydé-styrène. Cet agent compatibilisant est préférentiellement utilisé à hauteur de quelques pourcents en masse.

En tant que charges, on utilise de préférence des charges aptes à conférer au matériau composite des propriétés particulières comme, par exemple, des propriétés de conductibilité électrique qui sont obtenues par l'addition de noir de carbone ou de nanotubes de carbone.

Conformément à l'invention, le matériau composite est obtenu par imprégnation d'un matériau fibreux par la résine R1 ou le mélange de résines R1 et R2. Cette imprégnation, qui peut être réalisée par toutes les techniques de fabrication de préimprégnés connues de l'homme du métier (voir, à cet égard, les « TECHNIQUES DE L'INGENIEUR », Plastiques et Composites, volume AM5), est de préférence effectuée à une température allant de 40 à 60°C.

Le matériau fibreux peut être de différents types. Ainsi, il peut s'agir d'un matériau constitué de fibres de verre, de fibres de quartz, de fibres de carbone, de fibres de graphite, de fibres de silice, de fibres métalliques comme des fibres d'acier, des fibres d'aluminium ou des fibres de bore, de fibres organiques comme les fibres d'aramide, les fibres de polyéthylène, les fibres de polyester ou les fibres de poly(p-phénylène benzobisoxazole), plus connues sous le sigle BPO, ou encore de fibres de carbure de silicium.

Ce matériau fibreux peut se présenter, selon la nature des fibres qui le constituent, sous la forme de fils coupés, de fibres broyées, de mats à filaments continus, de mats à filaments coupés, de stratifils (ou « rovings » en langue anglaise), de tissus, de tricots, de feutres, ..., ou encore sous la forme de complexes réalisés par association de différents types de matériaux plans.

Selon une disposition particulièrement préférée de l'invention, le matériau composite à usage spatial est un matériau composite d'une structure Gossamer, auquel cas le matériau fibreux présent dans ce matériau composite est avantageusement en fibres de verre.

Il va de soi, toutefois, que le matériau composite peut également être destiné à tout autre type de structure à usage spatial comme, par exemple des parois d'habitats gonflables rigidifiés par polymérisation de résines ou des structures à corde comme celles décrites dans la demande de brevet français publiée sous le numéro 2 887 523.

Est également décrite une composition de résines utile pour la fabrication d'un matériau composite à usage spatial, qui comprend :
- au moins une résine polymérisable R1 choisie dans le groupe constitué par les résines de polybutadiène époxydé, les résines de polyisoprène époxydé, les résines de polysiloxane époxydé, les résines de triglycéride époxydé et les résines de polyéther époxydé, et
- au moins une résine polymérisable R2 choisie dans le groupe constitué par les résines époxydes de type novolaque et les résines époxydes de type diglycidyléther de bisphénol A,
les résines R1 et R2 présentant à l'état non polymérisé une valeur de perte de masse totale (TML) inférieure à 10%, une valeur de perte de masse relative (RML) inférieure à 10% et une valeur de matière volatile condensable (CVCM) inférieure à 1% telles que déterminées conformément à la norme ECSS-Q-70-02A, ainsi qu'un poids équivalent d'époxyde (EEW) de 100 à 600 g/mole.

Dans cette composition, les caractéristiques préférées des résines R1 et R2 sont exactement les mêmes que celles indiquées précédemment pour l'utilisation de la résine polymérisable R1. La viscosité de cette composition, ses propriétés de dégazage et les additifs qu'elle est susceptible de contenir sont également strictement les mêmes que celles indiquées précédemment pour l'utilisation de la résine polymérisable R1.

Est également décrit un matériau composite à usage spatial et, en particulier un matériau composite d'une structure Gossamer, qui comprend un matériau fibreux imprégné d'une composition de résines telle que précédemment décrite.

Ce matériau fibreux est de préférence choisi dans le groupe constitué par les fibres de verre, les fibres de quartz, les fibres de carbone, les fibres de graphite, les fibres métalliques, les fibres de poly(p-phénylène benzobisoxazole), les fibres d'aramide, les fibres de polyéthylène, les fibres de bore, les fibres de carbure de silicium et leurs mélange, les matériaux en fibres de verre étant tout particulièrement préférés.

D'autres caractéristiques et avantages de l'invention apparaîtront du complément de description qui suit et qui se rapporte à des exemples de réalisation de compositions de résines selon l'invention et de démonstration de leurs propriétés.

Bien entendu, ce complément de description n'est donné qu'à titre d'illustration de l'invention et n'en constitue en aucun cas une limitation.

### EXPOSE DE MODES DE REALISATION PARTICULIERS

### 1) Préparation de compositions de résines utiles selon l'invention :

On prépare des compositions de résines composées :
- de 25 à 75% en masse de la résine de polybutadiène époxydé à terminaisons hydroxyles qui est commercialisée par la société Sartomer sous le nom commercial Poly bd^{®} 605E, ci-après dénommée résine 1, et
- de 75 à 25% en masse de la résine époxyde de type novolaque qui est commercialisée par la société Hexion Specialty Chemicals sous le nom commercial EPON^{®} SU-8, ci-après dénommée résine 2.

Pour ce faire, on chauffe la résine 2 à 120°C jusqu'à ce qu'elle devienne fluide, puis on lui ajoute, à cette même température, la résine 1, elle-même préalablement chauffée à 70°C. Le mélange des deux résines est effectué manuellement.

### 2) Module d'Young des compositions de résines utiles selon l'invention après polymérisation :

Les compositions de résines préparées au point 1 ci-dessus correspondant, à l'état non polymérisé, à des mélanges polyphasés dans lesquels les phases riches en résine 1 ont une Tg très différente de celle des phases riches en résine 2 (environ -20°C *versus* 70-120°C), il a été décidé d'apprécier les propriétés mécaniques de ces compositions en mesurant leur module d'Young après polymérisation.

Pour ce faire, les compositions sont coulées, après addition de 2% en masse d'hexafluorophosphate du complexe fer-cyclopentadiényl 1-méthyl-naphtalène, dans des moules en silicone mesurant 70 mm de longueur sur 5 mm de largeur et 2 mm d'épaisseur, et recouvertes d'une feuille en polyéthylène téréphtalate destinée à éviter qu'elles ne soient souillées. Elles sont éclairées pendant 24 heures au moyen d'un panneau souple électro-luminescent Selectronic A6 (pouvoir lumineux : 1000 lux, couleur : blanc pur, dimensions : 150 x 110 mm) pour induire la photolyse du photoamorceur puis les moules sont placés dans une étuve à 80°C pendant 2 heures.

La mesure des modules d'Young est réalisée par analyse mécanique dynamique en utilisant une fréquence de viscoanalyse de 1 Hz.

Le tableau I ci-après présente les valeurs de module ainsi obtenues pour trois compositions différentes.

**TABLEAU I**

| **Composition** | **Module d'Young (GPa)** |
|---|---|
| 30% de résine **1** | 0,9 |
| 70% de résine **2** | |
| 40% de résine **1** | 0,5 |
| 60% de résine **2** | |
| 50% de résine **1** | 0,4 |
| 50% de résine **2** | |

### 3) Faisabilité de l'imprégnation de matériaux fibreux :

Les compositions de résines sont appliquées à une température d'environ 100°C sur des échantillons de tissu, eux-mêmes préalablement chauffés à 100°C, à l'aide d'un agitateur en verre.

Une fois les échantillons de tissu imprégnés, un drainage sous vide est effectué pendant 2 heures à 120°C.

La faisabilité de l'imprégnation est appréciée sur la base de trois critères : la facilité ou non d'imprégnation, le taux d'imprégnation et l'état du tissu imprégné.

Le tableau II ci-après présente les résultats obtenus pour trois compositions différentes.

**TABLEAU II**

| **Composition** | **Imprégnation** | **Taux d'imprégnation (%)** | **Etat du tissu** |
|---|---|---|---|
| 25% de résine **1** | Difficile | 29 | Sec |
| 75% de résine **2** | | | |
| 50% de résine **1** | Aisée | 31 | Très légère pégosité |
| 50% de résine **2** | | | |
| 75% de résine **1** | Aisée | 29 | Très légère pégosité |
| 25% de résine **2** | | | |

### 4) Dégazage de matériaux composites préparés à partir de la résine 1 ou de compositions de résines utiles selon l'invention :

On prépare des échantillons simulant une paroi de structure Gossamer, c'est-à-dire comprenant chacun deux plis de tissu de fibres de verre imprégné à un taux de 30% soit d'une composition de résines selon l'invention soit de la résine 1, pris en sandwich entre deux films en polyimide aromatique de 50 µm d'épaisseur du type de ceux commercialisés par la société Dupont sous le nom commercial Kapton^{®}.

Puis, on apprécie la tendance au dégazage de ces échantillons selon la norme ECSS-Q-70-02A. Pour chaque échantillon, l'analyse thermogravimétrique est réalisée à 125°C comme prévu par cette norme mais également à 80°C pour se placer dans des conditions de température plus proches de celles à laquelle les résines sont susceptibles de se trouver entre la mise en orbite de la structure Gossamer et le moment où se produit la polymérisation après déploiement de cette structure.

Le tableau 3 ci-après présente les valeurs de TML, de RML et de CVCM obtenues pour des échantillons préparés avec trois compositions différentes en fonction de la température à laquelle a été effectuée l'analyse thermogravimétrique : 125°C ou 80°C. Il présente également les valeurs de TML, de RML et de CVCM obtenues à 125°C pour les échantillons préparés avec la résine 1.

**TABLEAU 3**

| **Composition** | **Température de l'ATG (°C)** | **TML (%)** | **RML (%)** | **CVCM (%)** |
|---|---|---|---|---|
| 25% de résine **1** | 125°C | 2,62 | 2,39 | 1,09 |
| 75% de résine **2** | | | | |
| 50% de résine **1** | 125°C | 1,95 | 1,72 | 0,75 |
| 50% de résine **2** | | | | |
| 75% de résine **1** | 125°C | 1,21 | 0,98 | 0,59 |
| 25% de résine **2** | | | | |
| 100% de résine **1** | 125°C | 0,55 | 0,19 | 0 |
| 25% de résine **1** | 80°C | 0,39 | 0,18 | 0,08 |
| 75% de résine **2** | | | | |
| 50% de résine **1** | 80°C | 0,42 | 0, 19 | 0,06 |
| 50% de résine **2** | | | | |
| 75% de résine **1** | 80°C | 0,40 | 0,18 | 0,04 |
| 25% de résine **2** | | | | |

Les résultats des tests expérimentaux présentés ci-dessus montrent que les compositions de résines utiles selon l'invention permettent d'obtenir des matériaux composites dont les propriétés, tant en termes de dégazage que de tenue mécanique, sont parfaitement adaptées à un usage spatial et, notamment à un usage dans des structures Gossamer.

### REFERENCES CITEES

[1] D. P. Cadogan et S.E. Scaborough, 2001, American Institute of Aeronautics and Astronautics, AIAA Gossamer Spacecraft Forum, 16-19 avril 2001, Seattle, WA
[2] WO-A-2006/024805
[3] Güner et al., Prog. Polym. Sci. 2006, 31, 633-670
[4] Sperling et Manson, JAOCS 1983, 60(11), 1887-1892
[5] WO-A-2006/043009
[6] « TECHNIQUES DE L'INGENIEUR », Plastiques et Composites, volume AM5
[7] FR-A-2 887 523

## Revendications

1. Utilisation d'au moins une résine polymérisable R1 choisie dans le groupe constitué par les résines de polybutadiène époxydé, les résines de polyisoprène époxydé, les résines de polysiloxane époxydé, les résines de triglycéride époxydé et les résines de polyéther époxydé qui présentent à l'état non polymérisé :
- une valeur de perte de masse totale (TML) inférieure à 10%, une valeur de perte de masse relative (RML) inférieure à 10% et une valeur de matière volatile condensable (CVCM) inférieure à 1% telles que déterminées conformément à la norme ECSS-Q-70-02A ; et
- un poids équivalent d'époxyde (EEW) de 100 à 600 g/mole ;
pour la fabrication d'un matériau composite à usage spatial.

2. Utilisation selon la revendication 1, dans laquelle la résine R1 est une résine de polybutadiène époxydé.

3. Utilisation selon la revendication 2, dans laquelle la résine de polybutadiène époxydé comprend des prépolymères comprenant des unités répétitives répondant aux formules (I), (II) et (III) ci-après : 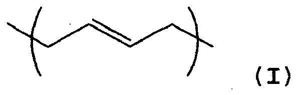 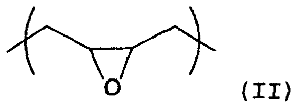 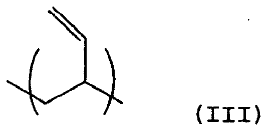 ainsi que deux groupes terminaux hydroxyles.

4. Utilisation selon l'une quelconque des revendications 1 à 3, dans laquelle la résine R1 est utilisée en mélange avec au moins une autre résine polymérisable R2, choisie dans le groupe constitué par les résines époxydes de type novolaque et les résines époxydes de type diglycidyléther de bisphénol A qui présentent à l'état non polymérisé :
- une valeur de perte de masse totale (TML) inférieure à 10%, une valeur de perte de masse relative (RML) inférieure à 10% et une valeur de matière volatile condensable (CVCM) inférieure à 1% telles que déterminées conformément à la norme ECSS-Q-70-02A ; et
- un poids équivalent d'époxyde (EEW) de 100 à 600 g/mole.

5. Utilisation selon la revendication 4, dans laquelle la résine R2 est une résine époxyde de type novolaque.

6. Utilisation selon la revendication 4 ou la revendication 5, dans laquelle le mélange de résines R1 et R2 présente, à l'état non polymérisé, une viscosité de 0,2 à 4 Pa.s à une température de 40 à 60°C.

7. Utilisation selon l'une quelconque des revendications 4 à 6, dans laquelle le mélange de résines R1 et R2 présente, à l'état non polymérisé, une valeur de perte de masse totale (TML) inférieure à 5%, une valeur de perte de masse relative (RML) inférieure à 5% et une valeur de matière volatile condensable (CVCM) inférieure à 1% telles que déterminées conformément à la norme ECSS-Q-70-02A.

8. Utilisation, selon l'une quelconque des revendications 4 à 7, dans laquelle le mélange de résines R1 et R2 comprend une résine polybutadiène époxydé à groupes terminaux hydroxyles et une résine époxyde de type novolaque dans un rapport massique allant de 1/3 à 3/1.

9. Utilisation selon l'une quelconque des revendications 1 à 8, dans laquelle le matériau composite est fabriqué par imprégnation d'un matériau fibreux par la résine R1 ou le mélange de résines R1 et R2.

10. Utilisation selon l'une quelconque des revendications 1 à 9, dans laquelle le matériau composite à usage spatial est un matériau composite d'une structure Gossamer.

## Patentansprüche

1. Verwendung von mindestens einem polymerisierbaren Harz R1, das aus der Gruppe von epoxidierten Polybutadienharzen, epoxidierten Polyisoprenharzen, epoxidierten Polysiloxanharzen, epoxidierten Triglyceridharzen und epoxidierten Polyetherharzen ausgewählt ist, die im nicht-polymerisierten Zustand:
- eine Größe des gesamten Masseverlusts (TML) von weniger als 10%, eine Größe des relativen Masseverlusts (RML) von weniger als 10% und eine Größe des kondensierbaren flüchtigen Materials (CVCM) von weniger als 1%, die gemäß der Norm ECSS-Q-70-02A bestimmt wurden; und
- ein Epoxid-Äquivalentgewicht (EEW) von 100 bis 600 g/mol zeigen;
zur Herstellung eines Verbundmaterials zur Verwendung im Weltraum.

2. Verwendung nach Anspruch 1, wobei das Harz R1 ein epoxidiertes Polybutadienharz ist.

3. Verwendung nach Anspruch 2, wobei das epoxidierte Polybutadienharz Präpolymere umfasst, die Wiederholungseinheiten der im Folgenden angegebenen Formeln (I), (II) und (III) : 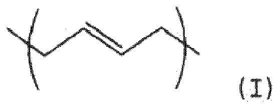 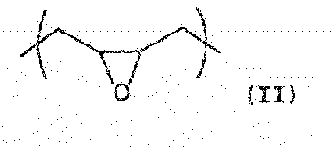 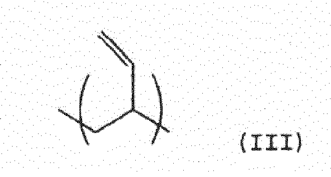 sowie zwei terminale Hydroxylgruppen umfassen.

4. Verwendung nach einem der Ansprüche 1 bis 3, wobei das Harz R1 gemischt mit mindestens einem anderen polymerisierbaren Harz R2 verwendet wird, das aus der Gruppe von Epoxidharzen des Novolak-Typs und Epoxidharzen des Diglycidylether-Typs von Bisphenol A ausgewählt ist, die im nicht-polymerisierten Zustand
- eine Größe des Gesamtmasseverlusts (TML) von weniger als 10%, eine Größe des relativen Masseverlusts (RML) von weniger als 10% und eine Größe des kondensierbaren flüchtigen Materials (CVM) von weniger als 1%, die gemäß der Norm ECSS-Q-70-02A bestimmt wurden; und
- ein Epoxid-Äquivalentgewicht (EEW) von 100 bis 600 g/mol zeigen.

5. Verwendung nach Anspruch 4, wobei das Harz R2 ein Epoxidharz des Novolak-Typs ist.

6. Verwendung nach Anspruch 4 oder Anspruch 5, wobei das Gemisch der Harze R1 und R2 im nicht-polymerisierten Zustand eine Viskosität von 0,2 bis 4 Pa·s bei einer Temperatur von 40 bis 60°C zeigt.

7. Verwendung nach einem der Ansprüche 4 bis 6, wobei das Gemisch der Harze R1 und R2 im nicht-polymerisierten Zustand eine Größe des Gesamtmasseverlusts (TML) von weniger als 5%, eine Größe des relativen Masseverlusts (RML) von weniger als 5% und eine Größe des kondensierbaren flüchtigen Materials (CVCM) von weniger als 1%, die gemäß der Norm ECSS-Q-70-02A bestimmt wurden, zeigt.

8. Verwendung nach einem der Ansprüche 4 bis 7, wobei das Gemisch der Harze R1 und R2 ein epoxidiertes Polybutadienharz mit terminalen Hydroxylgruppen und ein Epoxidharz des Novolak-Typs in einem Masseverhältnis von 1/3 bis 3/1 umfasst.

9. Verwendung nach einem der Ansprüche 1 bis 8, wobei das Verbundmaterial durch Tränken eines Fasermaterials mit dem Harz R1 oder dem Gemisch der Harze R1 und R2 hergestellt wird.

10. Verwendung nach einem der Ansprüche 1 bis 9, wobei das Verbundmaterial zur Verwendung im Weltraum ein Verbundmaterial einer Gossamer-Struktur ist.

## Claims

1. Use of at least one polymerisable resin R1 selected from the group consisting of epoxidised polybutadiene resins, epoxidised polyisoprene resins, epoxidised polysiloxane resins, epoxidised triglyceride resins and epoxidised polyether resins which have, in the non-polymerised state:
- a total mass loss (TML) value lower than 10%, a recovered mass loss (RML) value lower than 10%, and a collected volatile condensable material (CVCM) value lower than 1%, as determined in accordance with standard ECSS-Q-70-02A; and
- an epoxide equivalent weight (EEW) of 100 to 600 g/mole;
for the manufacture of a composite material for use in space.

2. Use according to claim 1, in which the resin R1 is an epoxidised polybutadiene resin.

3. Use according to claim 2, in which the epoxidised polybutadiene resin comprises prepolymers comprising repetitive units having formulas (I), (II) and (III) below: 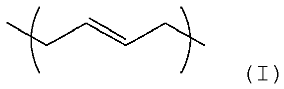 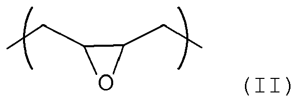 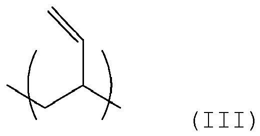 as well as two hydroxyl reactive end-groups.

4. Use according to any of claims 1 to 3, in which the resin R1 is used in mixture with at least one other polymerisable resin R2, selected from the group consisting of epoxide resins of the novolac type and epoxide resins of the bisphenol A diglycidyl ether type, which have, in the non-polymerised state:
- a total mass loss (TML) value lower than 10%, a recovered mass loss (RML) value lower than 10% and a collected volatile condensable material (CVCM) value lower than 1%, as determined in accordance with the standard ECSS-Q-70-02A; and
- an epoxide equivalent weight (EEW) of 100 to 600 g/mole.

5. Use according to claim 4, in which the resin R2 is an epoxide resin of the novolac type.

6. Use according to claim 4 or claim 5, in which the mixture of R1 and R2 resins has, in the non-polymerised state, a viscosity of 0.2 to 4 Pa.s at a temperature of 40 to 60°C.

7. Use according to any of claims 4 to 6, in which the mixture of R1 and R2 resins has, in the non-polymerised state, a total mass loss (TML) value lower than 5%, a recovered mass loss (RML) value less than 5% and a collected volatile condensable material (CVCM) value less than 1%, as determined in accordance with the standard ECSS-Q-70-02A.

8. Use according to any of claims 4 to 7, in which the mixture of R1 and R2 resins comprises an epoxidised polybutadiene resin having hydroxyl end-groups and an epoxide resin of the novolac type in a mass ratio ranging from 1/3 to 3/1.

9. Use according to any of claims 1 to 8, in which the composite material is manufactured by impregnating a fibrous material with the R1 resin or the mixture of R1 and R2 resins.

10. Use according to any of claims 1 to 9, in which the composite material for use in space is a composite material of a Gossamer structure.
